# EUROPÄISCHE PATENTSCHRIFT

(11) **EP 2 726 352 B1**
(45) Veröffentlichungstag und Bekanntmachung des Hinweises auf die Patenterteilung: **29.07.2015**
(21) Anmeldenummer: 12700978.5
(22) Anmeldetag: 24.01.2012
(51) Int. Cl.: B60T 17/22

(54) **VERFAHREN, SYSTEM UND COMPUTERPROGRAMMPRODUKT ZUR FUNKTIONSÜBERWACHUNG EINER SICHERHEITSÜBERWACHUNG EINER KFZ - STEUEREINHEIT**
METHOD, SYSTEM AND COMPUTER PROGRAMME PRODUCT FOR MONITORING THE FUNCTION OF A SAFETY MONITORING SYSTEM OF A CONTROL UNIT
PROCÉDÉ, SYSTÈME ET PRODUIT DE PROGRAMME INFORMATIQUE PERMETTANT DE SURVEILLER LE FONCTIONNEMENT D'UNE SURVEILLANCE DE SÉCURITÉ D'UNE UNITÉ DE COMMANDE DANS UN VÉHICULE À MOTEUR

(30) Priorität: 31.01.2011 DE 102011003358; 22.12.2011 DE 102011089590
(43) Veröffentlichungstag der Anmeldung: 07.05.2014
(73) Patentinhaber: Continental Automotive GmbH, 30165 Hannover (DE)
(72) Erfinder: PFAFFENEDER, Bernd, 93055 Regensburg (DE); KALBECK, Alexander, 93133 Burglengenfeld (DE); GOSS, Stefan, 93164 Brunn (DE)
(86) Internationale Anmeldenummer: PCT/EP2012/051009
(87) Internationale Veröffentlichungsnummer: WO 2012/104167

(56) Entgegenhaltungen:
- WO-A1-2007/090764
- WO-A1-2008/003547
- DE-A1-102009 046 006
- US-A1- 2004 046 448

## Beschreibung

Die Erfindung betrifft ein Verfahren zur Funktionsüberwachung einer Sicherheitsüberwachung einer Steuereinheit eines Aktuatorensystems eines Kraftfahrzeugs, ein System mit einer Steuereinheit für ein Aktuatorensystem eines Kraftfahrzeugs und einer ersten Überwachungsinstanz, eine Vorrichtung mit einer Steuereinheit in einem Aktuatorensystem eines Kraftfahrzeugs, ein System zur Funktionsüberwachung einer Sicherheitsüberwachung einer Steuereinheit eines Aktuatorensystems eines Kraftfahrzeugs sowie ein Computerprogrammprodukt.

Bei sicherheitsrelevanten Systemen im Bereich eines Kraftfahrzeugs wird ein Hauptrechner bezüglich einer Einhaltung von Sicherheitsanforderungsstufen, z.B. der Klasse ASIL C von einem Zweitrechner kontinuierlich überprüft. Dabei bedeutet ASIL Automotive Sicherheits-Integritäts-Level und die Klasse C impliziert die Einhaltung von Sicherheitsmaßnahmen gemäß der Norm ISO WD 26262 zur Aufrechterhaltung der Kontrollierbarkeit von sicherheitsrelevanten Systemen des Kraftfahrzeugs.

Bei im Stand der Technik bekannten Ausführungsformen zur Sicherheitsüberwachung des Hauptrechners kann es zur Blockierung der gesamten Kommunikation durch den Zweitrechner kommen, so dass eine weitere externe Überwachungsinstanz aus dieser Situation ein fehlerhaftes Verhalten des Hauptrechners ableitet. In bisherigen Ausführungsformen zur Sicherheitsüberwachung des Hauptrechners kann sogar der Hauptrechner selbst zum Beispiel über eine Reset-Leitung, durch eine Fehlprogrammierung oder durch andere Fehler den die Sicherheitsüberwachung durchführenden Zweitrechner außer Funktion setzen. Den Stand der Technik geben die Druckschriften DE 10 2009 046 006 A1, WO 2007/090764 A1 und WO 2008/003547 A1 wieder.

Demgegenüber liegt der Erfindung die Aufgabe zugrunde, ein verbessertes Verfahren zur Funktionsüberwachung einer Sicherheitsüberwachung einer Steuereinheit eines Aktuatorensystems eines Kraftfahrzeugs, ein verbessertes System mit einer Steuereinheit für ein Aktuatorensystem eines Kraftfahrzeugs und einer ersten Überwachungsinstanz, eine verbesserte Vorrichtung mit einer Steuereinheit in einem Aktuatorensystem eines Kraftfahrzeugs, ein verbessertes System zur Funktionsüberwachung einer Sicherheitsüberwachung einer Steuereinheit eines Aktuatorensystems eines Kraftfahrzeugs sowie ein Computerprogrammprodukt zu schaffen.

Die der Erfindung zugrunde liegende Aufgabe wird jeweils mit den Merkmalen der unabhängigen Patentansprüche gelöst. Bevorzugte Ausführungsformen der Erfindung sind in den abhängigen Patentansprüchen angegeben.

Es wird ein Verfahren zur Funktionsüberwachung einer Sicherheitsüberwachung einer Steuereinheit eines Aktuatorensystems eines Kraftfahrzeugs geschaffen, wobei mittels der Funktionsüberwachung eine Überprüfung erfolgt, ob die Sicherheitsüberwachung fehlerfrei durchgeführt wird, wobei die Sicherheitsüberwachung durch eine erste Überwachungsinstanz erfolgt und die Funktionsüberwachung durch eine zweite Überwachungsinstanz erfolgt, wobei die erste Überwachungsinstanz ein Ergebnis der Sicherheitsüberwachung in definierten Zeitabständen als eine Information an die zweite Überwachungsinstanz sendet, wobei die erste Überwachungsinstanz und die zweite Überwachungsinstanz frei von einer gemeinsamen Schnittstelle sind, wobei ein Empfang der Information durch die zweite Überwachungsinstanz durch Nutzung einer Schnittstelle zwischen der zweiten Überwachungsinstanz und der Steuereinheit erfolgt, wobei die Information in einem durch die Steuereinheit uninterpretierbarem Format codiert ist.

Dies kann den Vorteil haben, dass eine eigene externe Schnittstelle für die erste Überwachungsinstanz zu einer weiteren externen Überwachungsinstanz nicht notwendig ist. Die Auslegung der ersten Überwachungsinstanz kann daher sehr einfach, klein und kostengünstig gehalten werden. Des Weiteren bleibt in vorteilhafter Weise bei einer Aktivierung einer Sicherheitsfunktion durch die erste Überwachungsinstanz eine bestehende Kommunikation der Steuereinheit bestehen und wird nicht durch Aktivitäten der ersten Überwachungsinstanz blockiert. Zum Beispiel würde bei Durchführung einer Diagnosefunktion oder eines Software-Updates der ersten Überwachungsinstanz eine bestehende Kommunikation der Steuereinheit nicht unterbrochen oder anderweitig gestört werden.

Ein weiterer Vorteil besteht darin, dass es ausgeschlossen ist, dass die Steuereinheit der zweiten externen Überwachungsinstanz fälschlicherweise mitteilt, dass die die Sicherheitsüberwachung der Steuereinheit ausführende Überwachungsinstanz fehlerfrei arbeitet, obwohl sie dies nicht tut. Die Verlässlichkeit des Informationsgehalts der Information, welche die zweite externe Überwachungsinstanz empfängt, wird wesentlich erhöht. Die Funktionssicherheit der Funktionsüberwachung der ersten Überwachungsinstanz, welche die Steuereinheit hinsichtlich einer Einhaltung von vordefinierten Sicherheitsanforderungsstufen überwacht, wird signifikant erhöht.

Dass die Information uninterpretierbar für die Steuereinheit ist, verhindert in vorteilhafter Weise, dass in der Kommunikation der Steuereinheit mit anderen externen Steuereinheiten ein korrektes Überwachungsergebnis vorgetäuscht wird. Gleichzeitig wird verhindert, dass die Steuereinheit durch eine Fehlprogrammierung fälschlicherweise ein korrektes Überwachungsergebnis vortäuscht und dieses an die zweite Überwachungsinstanz sendet.

Das Risiko, dass die zweite externe Überwachungsinstanz eine Fehlinformation über die Aktivität bzw. die Nicht-Aktivität der ersten Überwachungsinstanz erhält, wird wesentlich verringert. Die Gefahr, dass ein Ausfall der Sicherheitsüberwachung der Steuereinheit durch die erste Überwachungsinstanz nicht detektiert wird, wird wesentlich verringert. Dadurch wird gleichzeitig die Gefahr, dass die sicherheitsrelevante Steuereinheit Fehlfunktionen aufweist, gesenkt.

Würde es sich beispielsweise bei der Steuereinheit um eine Steuereinheit zur Steuerung und Kontrolle einer elektrischen Vakuumpumpe eines Kraftfahrzeugs handeln, würde es sich um sicherheitsrelevantes System handeln, dessen Zuverlässigkeit durch das beschriebene Verfahren signifikant erhöht werden könnte.

Dabei ist in diesem Kontext ein System "sicherheitsrelevant", wenn eine Fehlfunktion im System im Regelfall zu einer unmittelbaren Gefahr für Leib und Leben von Verkehrsteilnehmern führen kann. Die Fahrsituation ist durch die Fahrzeuginsassen nicht beherrschbar oder beeinflussbar. Konform zum Standard ISO WD 26262 wird als "Zuverlässigkeit" eines Systems die Fähigkeit des Systems bezeichnet, einen Dienst vertrauenswürdig zu leisten. Das trifft z.B. unter der Bedingung zu, dass das System korrekt gestartet wurde und sowohl während des Beginns als auch während des Verlaufs keine Fehler und/oder Ausfälle auftreten. Das beschriebene Verfahren gewährleistet somit eine Risikominimierung hinsichtlich der Wahrscheinlichkeit eines Auftretens eines Fehlers und/oder eines Ausfalles eines sicherheitsrelevanten Systems.

Nach einer Ausführungsform der Erfindung leitet im Falle, dass die Funktionsüberwachung ergibt, dass die von der zweiten Überwachungsinstanz empfangene Information über die Sicherheitsüberwachung von vordefinierten Soll-Sendungssignalen hinsichtlich Inhalt und/oder Zeitabständen abweicht, wobei eine Abweichung der von der zweiten Überwachungsinstanz empfangenen Information über die Sicherheitsüberwachung von den vordefinierten Soll-Sendungssignalen hinsichtlich Inhalt und/oder Zeitabständen umfasst:
- eine Fehlfunktion der ersten Überwachungsinstanz und/oder
- eine Fehlfunktion der Steuereinheit,
die zweite Überwachungsinstanz, mindestens eine Sicherheitsmaßnahme zur Kompensation der Fehlfunktion der ersten Überwachungsinstanz und oder der Fehlfunktion der Steuereinheit ein.

Dies kann den Vorteil haben, dass zum Beispiel bei einer Fehlfunktion oder bei einem Totalausfall der ersten Überwachungsinstanz die zweite Überwachungsinstanz die Funktion der Sicherheitsüberwachung der Steuereinheit übernimmt und somit als ein Backup-System der ersten Überwachungsinstanz fungiert. Dadurch, dass die zweite Überwachungsinstanz die erste Überwachungsinstanz kontinuierlich hinsichtlich ihrer Funktionalität überwacht, wird das Risiko, dass ein fehlerhafter Betrieb eines sicherheitsrelevanten Systems nicht detektiert wird, wesentlich verringert.

Sollte zum Beispiel die Steuereinheit selbst, zum Beispiel über eine Reset-Leitung, durch eine Fehlprogrammierung oder durch einen Fehler anderer Art die erste Überwachungsinstanz außer Funktion setzen, so würde die zweite Überwachungsinstanz dies registrieren und zur Kompensation der Fehlfunktion der Steuereinheit und/oder der Fehlfunktion der ersten Überwachungsinstanz mindestens eine geeignete Sicherheitsmaßnahme einleiten. Würde es sich beispielsweise bei dem sicherheitsrelevanten System um eine elektrische Vakuumpumpe handeln, welche eine Fehlfunktion oder einen Totalausfall während des Betriebs aufwiese, könnte die zweite Überwachungsinstanz zur Kompensation der ausgefallenen Bremskraftverstärkung zum Beispiel eine hydraulische Bremskraftverstärkung initiieren.

Dadurch, dass die zweite Überwachungsinstanz einen kontinuierlichen Abgleich zwischen den von der ersten Überwachungsinstanz empfangenen Signalen und vordefinierten Soll-Sendungssignalen hinsichtlich Inhalt und/oder Zeitabständen vornimmt, ist eine hohe Zuverlässigkeit hinsichtlich der Funktionsüberwachung der ersten Überwachungsinstanz gewährleistet.

Nach einer Ausführungsform der Erfindung leitet im Falle, dass die Funktionsüberwachung ergibt, dass die von der zweiten Überwachungsinstanz empfangene Information über die Sicherheitsüberwachung von vordefinierten Soll-Sendungssignalen hinsichtlich Inhalt und/oder Zeitabständen abweicht, wobei eine Abweichung der von der zweiten Überwachungsinstanz empfangenen Information über die Sicherheitsüberwachung von den vordefinierten Soll-Sendungssignalen hinsichtlich Inhalt und/oder Zeitabständen umfasst:
- einen Übertragungsfehler der Information und/oder
- einen Fehler in der Information,
die zweite Überwachungsinstanz mindestens eine Sicherheitsmaßnahme zur Kompensation der Fehlfunktion der ersten Überwachungsinstanz und/oder der Fehlfunktion der Steuereinheit ein.

Dies kann den Vorteil haben, dass zum Beispiel auch bei einem Ausbleiben der Information, was zum Beispiel durch einen Fehler an einem Interface zwischen der Steuereinheit und der zweiten Überwachungsinstanz oder durch einen Totalausfall der ersten Überwachungsinstanz bedingt sein kann, die zweite Überwachungsinstanz Sicherheitsmaßnahmen einleitet.

Dadurch, dass die zweite Überwachungsinstanz einen ständigen Abgleich zwischen den empfangenen Signalen und vordefinierten Soll-Sendungssignalen vornimmt, können nicht nur Übertragungsfehler detektiert, sondern auch Fehler in der Information selbst detektiert werden. Weichen die von der zweiten Überwachungsinstanz empfangenen Signale von den vordefinierten Soll-Sendungssignalen hinsichtlich des Inhalts und/oder Zeitabständen ab, so leitet vorsichtshalber die zweite Überwachungsinstanz Sicherheitsmaßnahmen wie z.B. ein Absetzen eines Warnsignals und/oder eine Aktivierung des hydraulischen Bremssystems ein. Einzuhaltende Sicherheitsanforderungen, wie sie von der ISO Norm 26262 hinsichtlich der ASIL C-Klasse gefordert werden, können durch das beschriebene Verfahren mit hoher Zuverlässigkeit gewährleistet werden.

Nach einer Ausführungsform der Erfindung erzeugt im Falle, dass die Funktionsüberwachung ergibt, dass die von der zweiten Überwachungsinstanz empfangene Information über die Sicherheitsüberwachung von vordefinierten Soll-Sendungssignalen hinsichtlich dem Inhalt und/oder den Zeitabständen abweicht, die zweite Überwachungsinstanz eine Warnmeldung.

Dies kann den Vorteil haben, dass zum Beispiel dem Fahrer des Fahrzeugs zum Beispiel durch Aktivierung einer Warnlampe beim Fahren mitgeteilt wird, dass zum Beispiel die Bremskraftverstärkung eingeschränkt ist, wodurch der Fahrer die Möglichkeit erhält, selbst kompensatorische Maßnahmen zum Ausgleich der ausgefallenen Bremskraftverstärkung vorzunehmen und seine Fahrweise entsprechend anzupassen.

Nach einer Ausführungsform der Erfindung wird ein Verfahren zur Sicherheitsüberwachung einer Steuereinheit eines Aktuatorensystems eines Kraftfahrzeugs geschaffen, wobei eine Sicherheitsüberwachung der Steuereinheit durch eine erste Überwachungsinstanz erfolgt, wobei die Steuereinheit und die erste Überwachungsinstanz ein System bilden und wobei die erste Überwachungsinstanz ein Ergebnis der Sicherheitsüberwachung in zeitlich definierten Zeitabständen als eine Information an eine zweite, an das System ankoppelbare Überwachungsinstanz sendet, wobei die erste Überwachungsinstanz und die zweite Überwachungsinstanz frei von einer gemeinsamen Schnittstelle sind, wobei eine Schnittstelle als die Schnittstelle des Systems der zweiten Überwachungsinstanz dient, wobei das System die Information durch Nutzung der Schnittstelle von der Steuereinheit an die zweite Überwachungsinstanz überträgt, wobei die erste Überwachungsinstanz die Information in einem durch die Steuereinheit uninterpretierbaren Format codiert.

Dies kann den Vorteil haben, dass die Steuereinheit eines sicherheitsrelevanten Systems und eine erste Überwachungsinstanz, welche eine kontinuierliche Sicherheitsüberwachung der Steuereinheit ausführt, in einer einzigen Systemeinheit integriert werden können. Dadurch, dass die erste Überwachungsinstanz als ein Ergebnis der Sicherheitsüberwachung für die Steuereinheit nicht interpretierbare Signale bereitstellt, kann für eine weitere Übertragung dieser Signale eine einzige Schnittstelle, nämlich die schon vorhandene Schnittstelle der Steuereinheit verwendet werden. Die erste Überwachungsinstanz kann somit kleinvolumig und kostengünstig ausgelegt werden. Eine Extra-Schnittstelle, zum Beispiel ein zusätzlicher CAN-Bus zur Übertragung der von der ersten Überwachungsinstanz gesendeten Information hinsichtlich eines Ergebnisses der kontinuierlichen Sicherheitsüberwachung der Steuereinheit kann somit entfallen. Eine Steuereinheit eines sicherheitsrelevanten Systems kann somit mit integrierter erster Überwachungsinstanz als ein einziges Modul ausgelegt werden.

In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung ein System mit einer Steuereinheit für ein Aktuatorensystem eines Kraftfahrzeugs und einer ersten Überwachungsinstanz, wobei die erste Überwachungsinstanz dazu ausgebildet ist, eine Sicherheitsüberwachung der Steuereinheit durchzuführen, wobei die erste Überwachungsinstanz ferner dazu ausgebildet ist, ein Ergebnis der Sicherheitsüberwachung in zeitlich definierten Zeitabständen als eine Information an eine an das System ankoppelbare zweite Überwachungsinstanz zu senden, wobei die erste Überwachungsinstanz und die zweite Überwachungsinstanz frei von einer gemeinsamen Schnittstelle sind, wobei die Steuereinheit eine Schnittstelle für die zweite Überwachungsinstanz aufweist, wobei das System dazu ausgebildet ist, die Information durch Nutzung der Schnittstelle von der Steuereinheit an die zweite Überwachungsinstanz zu übertragen, wobei die Information in einem durch die Steuereinheit uninterpretierbarem Format codiert ist.

In einem weiteren Aspekt betrifft die Erfindung ein System zur Funktionsüberwachung einer Sicherheitsüberwachung einer Steuereinheit eines Aktuatorensystems eines Kraftfahrzeugs, wobei das System eine erste Überwachungsinstanz, eine zweite Überwachungsinstanz und die Steuereinheit aufweist, wobei die Funktionsüberwachung dazu ausgebildet ist, eine Überprüfung vorzunehmen, ob die Sicherheitsüberwachung fehlerfrei durchgeführt wird, wobei die erste Überwachungsinstanz dazu ausgebildet ist, die Sicherheitsüberwachung durchzuführen, und die zweite Überwachungsinstanz dazu ausgebildet ist, die Funktionsüberwachung durchzuführen, wobei die erste Überwachungsinstanz dazu ausgebildet ist, ein Ergebnis der Sicherheitsüberwachung in zeitlich definierten Zeitabständen als eine Information an die zweite Überwachungsinstanz zu senden, wobei die erste Überwachungsinstanz und die zweite Überwachungsinstanz frei von einer gemeinsamen Schnittstelle sind, wobei die zweite Überwachungsinstanz dazu ausgebildet ist, die Information mittels Nutzung einer Schnittstelle zwischen der zweiten Überwachungsinstanz und der Steuereinheit zu empfangen, wobei die Information in einem durch die Steuereinheit uninterpretierbaren Format codiert ist.

Im Folgenden werden Ausführungsformen der Erfindung anhand der folgenden Zeichnung näher erläutert.

Es zeigt:

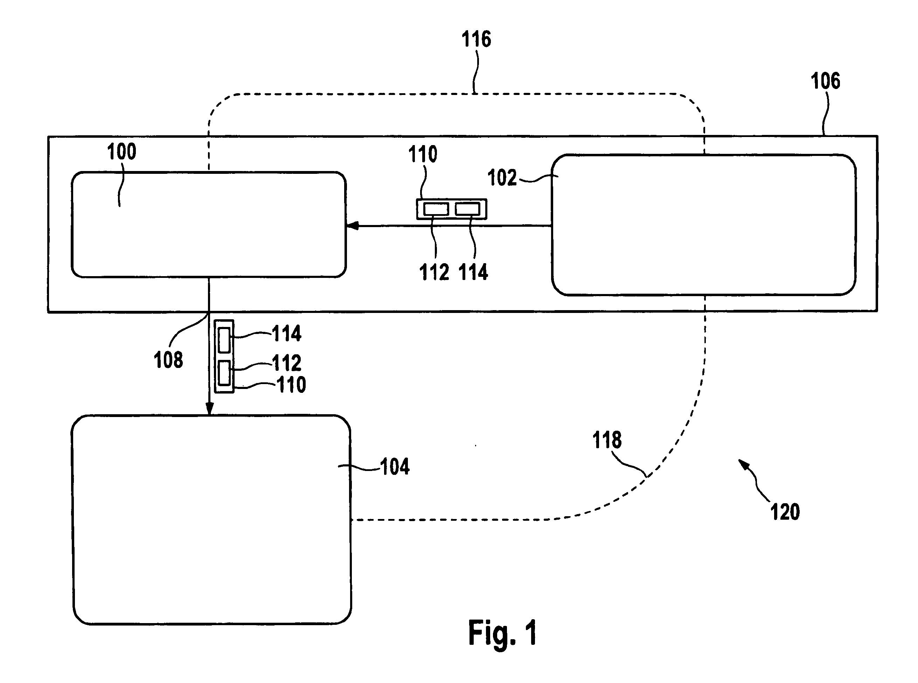

- Figur 1: ein Blockdiagramm des Systems bestehend aus einer Steuereinheit, einer ersten Überwachungsinstanz und einer zweiten Überwachungsinstanz.

Die Figur 1 zeigt ein Blockdiagramm eines Systems 120 umfassend eine Steuereinheit 100 eines sicherheitsrelevanten Systems, zum Beispiel einer elektrischen Vakuumpumpe. Das System 120 umfasst weiter eine erste Überwachungsinstanz 102 und eine zweite Überwachungsinstanz 104. Die Steuereinheit 100 wird durch eine erste Überwachungsinstanz 102 kontinuierlich hinsichtlich einer Einhaltung von vordefinierten Sicherheitsanforderungen mittels einer Sicherheitsüberwachung 116 überwacht. Als ein Ergebnis dieser Sicherheitsüberwachung 116 stellt die erste Überwachungsinstanz 102 eine Information 110 bereit, die in einem für die Steuereinheit 100 uninterpretierbaren Format bei Passage der Steuereinheit 100 und unter Nutzung einer Schnittstelle 108 der Steuereinheit an eine ankoppelbare zweite Überwachungsinstanz 104 gesendet werden kann. Die zweite Überwachungsinstanz 104 nimmt durch kontinuierliche Auswertung der empfangenen Information 110 eine ständige Funktionsüberwachung 118 der ersten Überwachungsinstanz 102 vor.

Die Information 110 wird von der ersten Überwachungsinstanz 102 in codierter Form, welche vordefinierte Symbole, Buchstaben, Zahlen und/oder ein Zeitsignal enthalten kann, an die zweite Überwachungsinstanz 104 über die Steuereinheit 100 gesendet. Die zweite Überwachungsinstanz 104 vergleicht die empfangene Information bezüglich Inhalt und Zeittaktung mit vordefinierten Soll-Sendungssignalen. Bei einer Abweichung der empfangenen Signale von den vordefinierten Sollwerten leitet die zweite Überwachungsinstanz 104 sofort geeignete Sicherheitsmaßnahmen ein.

Ausführungsformen der Erfindung können jede geeignete Form von Codierung aufweisen:
a) Die erste Überwachungsinstanz könnte zum Beispiel einen konstanten Wert, zum Beispiel $A5, im Gutfall an die zweite Überwachungsinstanz senden. Die zweite Überwachungsinstanz 104 prüft dann die empfangene Information 110 auf den korrekten Code $A5. Würde die zweite Überwachungsinstanz 104 einen davon abweichenden Wert als Information 110 empfangen, ist die zweite Überwachungsinstanz 104 darüber informiert, dass ein Fehler im Betrieb der ersten Überwachungsinstanz 106 und/oder im Betrieb der Steuereinheit 100 vorliegt.
b) Eine weitere beispielhafte mögliche Codierung könnte eine sich periodisch ändernde Sequenz von Symbolen, Buchstaben und/oder Zahlen aufweisen, zum Beispiel $A→$A3→ $A7→ $AF→ $A1. Die zweite Überwachungsinstanz 104 prüft dann wieder die empfangene Information 110 gegen eine solch vordefinierte Soll-Codesequenz.
c) Eine weitere mögliche Codierungsform könnte einen ZR_Code, zum Beispiel $A5, beinhalten und eine sich periodisch ändernde Zeitsequenz, zum Beispiel einen Alive Counter $00-$03, umfassen. Dieser Code könnte mit dem Alive Counter mathematisch mit einer Verpackungsvorschrift verknüpft werden, zum Beispiel durch eine Multiplikation oder durch eine Boolesche Operation, zum Beispiel XOR. Würde die erste Überwachungsinstanz 102 den Alive Counter sowie einen berechneten Code bei Passage der Steuereinheit an die zweite Überwachungsinstanz 104 senden, so würde die zweite Überwachungsinstanz 104 diesen berechneten Code mittels einer vordefinierten Entpackungsvorschrift decodieren, den Alive Counter auswerten und den empfangenen ZR_Code auf Korrektheit prüfen.

Bei allen Ausführungsformen der Codierung ist wesentlich, dass die zweite Überwachungsinstanz dazu ausgebildet ist, die von der ersten Überwachungsinstanz 102 vorgenommene Vorwärtsrechnung wieder zurück zu rechnen.

Stellt die zweite Überwachungsinstanz 104 beim ständigen Abgleich der empfangenen Information 108 eine Abweichung zu vordefinierten Soll-Sendungssignalen fest, leitet die zweite Überwachungsinstanz 104 umgehend geeignete Sicherheitsmaßnahmen ein. Als verursachende Fehlerquellen für eine Abweichung zwischen empfangenen Signalen und den vordefinierten Soll-Signalen kommen in Betracht:
- ein Ausfall und/oder ein fehlerhafter Betrieb der Steuereinheit 100,
- ein Ausfall und/oder ein fehlerhafter Betrieb der ersten Überwachungsinstanz 102,
- ein Fehler bei der Übertragung der Information 108, zum Beispiel verursacht durch einen Defekt an der Schnittstelle 108, umfassend auch einen Ausfall des Informationsempfangs und/oder
- ein Fehler in der Information 108, verursacht beispielsweise durch eine Fehlprogrammierung oder eine unerwünschte Manipulation.

In jedem Fall einer Abweichung von empfangenen Signalen und vordefinierten Soll-Signalen leitet die zweite Überwachungsinstanz 104 Maßnahmen ein, um eine Fehlfunktion der ersten Überwachungsinstanz 102 und/oder eine Fehlfunktion der Steuereinheit 100 zu kompensieren. Im Falle, dass die erste Überwachungsinstanz 102 ausgefallen ist oder einen fehlerhaften Betrieb aufweist, leitet die zweite Überwachungsinstanz 104 Sicherheitsfunktionen bzw. Sicherheitsmaßnahmen ein. So könnte die zweite Überwachungsinstanz 104 beispielsweise eine Warnmeldung absetzen und/oder beispielsweise ein hydraulisches Bremssystem aktivieren. Bei einem Ausfall und/oder einem fehlerhaften Betrieb der Steuereinheit 100 leitet die zweite Überwachungsinstanz 104 eine Maßnahme ein, um die Wirkung des durch die Steuereinheit 100 gesteuerten Aktuatorensystems des Kraftfahrzeugs durch eine Initiierung eines anderen Aktuatorensystems mit gleicher Wirkung zu ersetzen. Würde die Steuereinheit 100 zum Beispiel eine elektrische Vakuumpumpe steuern und die zweite Überwachungsinstanz 104 eine Abweichung der empfangenen Signale von den vordefinierten Soll-Sendungssignalen feststellen, so würde die zweite Überwachungsinstanz 104 die elektrische Vakuumpumpe ausschalten und stattdessen das hydraulische Bremsverstärkungssystem aktivieren.

Um zu gewährleisten, dass die Funktionsüberwachung 118 der ersten Überwachungsinstanz 102 zeitnah von der zweiten Überwachungsinstanz 104 durchgeführt wird, kann die von der ersten Überwachungsinstanz 102 gesendete Information 110 ein Zeitsignal 114 enthalten. Um zu vermeiden, dass die Steuereinheit 100 den Code der Information "lernt", kann in einer weiteren Ausführungsform der Erfindung dieser Code an der ersten Überwachungsinstanz 102 ständig geändert werden. Dadurch wird der Grad der Zuverlässigkeit der Funktionsüberwachung 118 der ersten Überwachungsinstanz 102 hinsichtlich dessen Sicherheitsüberwachung 116 der Steuereinheit 100 signifikant erhöht. Die von der ISO Norm 26262 geforderten Sicherheitsvorkehrungen auf System-, Hardware- und Software-Ebene bei sicherheitsrelevanten Systemen in Kraftfahrzeugen kann das beschriebene Verfahren somit in einem hohen Maße erfüllen.

### Bezugszeichenliste

- 100: Steuereinheit
- 102: erste Überwachungsinstanz
- 104: zweite Überwachungsinstanz
- 106: System aus Steuereinheit und erster Überwachungsinstanz
- 108: Schnittstelle der Steuereinheit
- 110: Information
- 112: Inhalt der Information
- 114: Zeitsignal der Information
- 116: Sicherheitsüberwachung
- 118: Funktionsüberwachung
- 120: System zur Funktionsüberwachung einer Sicherheitsüberwachung

## Patentansprüche

1. Computer-implementiertes Verfahren zur Funktionsüberwachung (118) einer Sicherheitsüberwachung (116) einer Steuereinheit (100) eines Aktuatorensystems eines Kraftfahrzeugs, wobei mittels der Funktionsüberwachung (118) eine Überprüfung erfolgt, ob die Sicherheitsüberwachung (116) fehlerfrei durchgeführt wird, wobei die Sicherheitsüberwachung (116) durch eine erste Überwachungsinstanz (102) erfolgt und die Funktionsüberwachung (118) durch eine zweite Überwachungsinstanz (104) erfolgt, wobei die erste Überwachungsinstanz (102) ein Ergebnis der Sicherheitsüberwachung (116) in definierten Zeitabständen (114) als eine Information (110) an die zweite Überwachungsinstanz (104) sendet, wobei die erste Überwachungsinstanz (102) und die zweite Überwachungsinstanz (104) frei von einer gemeinsamen Schnittstelle sind, wobei ein Empfang der Information (110) durch die zweite Überwachungsinstanz (104) durch Nutzung einer Schnittstelle (108) zwischen der zweiten Überwachungsinstanz (104) und der Steuereinheit (100) erfolgt, wobei die Information (110) in einem durch die Steuereinheit (100) uninterpretierbarem Format codiert ist.

2. Verfahren nach Anspruch 1, wobei im Falle, dass die Funktionsüberwachung (118) ergibt, dass die von der zweiten Überwachungsinstanz (104) empfangene Information (110) über die Sicherheitsüberwachung (116) von vordefinierten Soll-Sendungssignalen hinsichtlich Inhalt (112) und/oder Zeitabständen (114) abweicht, wobei eine Abweichung der von der zweiten Überwachungsinstanz (104) empfangenen Information (110) über die Sicherheitsüberwachung (116) von den vordefinierten Soll-Sendungssignalen hinsichtlich Inhalt (112) und/oder Zeitabständen (114) umfasst:
- eine Fehlfunktion der ersten Überwachungsinstanz (102) und/oder
- eine Fehlfunktion der Steuereinheit (100),
die zweite Überwachungsinstanz (104) mindestens eine Sicherheitsmaßnahme zur Kompensation der Fehlfunktion der ersten Überwachungsinstanz (102) und/oder der Fehlfunktion der Steuereinheit (100) einleitet.

3. Verfahren nach Anspruch 1, wobei im Falle, dass die Funktionsüberwachung (118) ergibt, dass die von der zweiten Überwachungsinstanz (104) empfangene Information (110) über die Sicherheitsüberwachung (116) von vordefinierten Soll-Sendungssignalen hinsichtlich Inhalt (112) und/oder Zeitabständen (114) abweicht, wobei eine Abweichung der von der zweiten Überwachungsinstanz (104) empfangenen Information (110) über die Sicherheitsüberwachung (116) von den vordefinierten Soll-Sendungssignalen hinsichtlich Inhalt (112) und/oder Zeitabständen (114) umfasst:
- einen Übertragungsfehler der Information (110) und/oder
- einen Fehler in der Information (110),
die zweite Überwachungsinstanz (104) mindestens eine Sicherheitsmaßnahme zur Kompensation der Fehlfunktion der ersten Überwachungsinstanz (102) und/oder der Fehlfunktion der Steuereinheit (100) einleitet.

4. Verfahren nach Anspruch 2 oder 3, wobei im Falle, dass die Funktionsüberwachung (118) ergibt, dass die von der zweiten Überwachungsinstanz (104) empfangene Information (110) über die Sicherheitsüberwachung (116) von vordefinierten Soll-Sendungssignalen hinsichtlich dem Inhalt (112) und/oder den Zeitabständen (114) abweicht, die zweite Überwachungsinstanz (104) eine Warnmeldung erzeugt.

5. Verfahren zur Sicherheitsüberwachung (116) einer Steuereinheit (100) eines Aktuatorensystems eines Kraftfahrzeugs, wobei eine Sicherheitsüberwachung (116) der Steuereinheit (100) durch eine erste Überwachungsinstanz (102) erfolgt, wobei die Steuereinheit (100) und die erste Überwachungsinstanz (102) ein System (106) bilden,
wobei die erste Überwachungsinstanz (102) ein Ergebnis der Sicherheitsüberwachung (116) in zeitlich definierten Zeitabständen (114) als eine Information (110) an eine zweite an das System (106) ankoppelbare Überwachungsinstanz (104) sendet, wobei die erste Überwachungsinstanz (102) und die zweite Überwachungsinstanz (104) frei von einer gemeinsamen Schnittstelle sind, wobei eine Schnittstelle (108) als die Schnittstelle (108) des Systems (106) zur zweiten Überwachungsinstanz (104)dient, wobei das System (106) die Information (110) durch Nutzung der Schnittstelle (108) von der Steuereinheit (100) an die zweite Überwachungsinstanz (104) überträgt, wobei die erste Überwachungsinstanz (102) die Information (110) in einem durch die Steuereinheit (100) uninterpretierbarem Format codiert.

6. Computerprogrammprodukt mit von einem Prozessor ausführbaren Instruktionen zur Durchführung der Verfahrensschritte gemäß einem der vorigen Ansprüche.

7. System (106) mit einer Steuereinheit (100) für ein Aktuatorensystem eines Kraftfahrzeugs und einer ersten Überwachungsinstanz (102), wobei die erste Überwachungsinstanz (102) dazu ausgebildet ist, eine Sicherheitsüberwachung (116) der Steuereinheit (100) durchzuführen, wobei die erste Überwachungsinstanz (102) ferner dazu ausgebildet ist, ein Ergebnis der Sicherheitsüberwachung (116) in zeitlich definierten Zeitabständen (114) als eine Information (110) an eine an das System (106) ankoppelbare zweite Überwachungsinstanz (104) zu senden, wobei die erste Überwachungsinstanz (102) und die zweite Überwachungsinstanz (104) frei von einer gemeinsamen Schnittstelle (108) sind, wobei die Steuereinheit (100) eine Schnittstelle (108) für die zweite Überwachungsinstanz (104) aufweist, wobei das System dazu ausgebildet ist, die Information (110) durch Nutzung der Schnittstelle (108) von der Steuereinheit (100) an die zweite Überwachungsinstanz (104) zu übertragen, wobei die Information (110) in einem durch die Steuereinheit (100) uninterpretierbarem Format codiert ist.

8. System (120) zur Funktionsüberwachung (118) einer Sicherheitsüberwachung (116) einer Steuereinheit (100) eines Aktuatorensystems eines Kraftfahrzeugs, wobei das System eine erste Überwachungsinstanz (102), eine zweite Überwachungsinstanz (104) und die Steuereinheit (100) aufweist, wobei die Funktionsüberwachung (118) dazu ausgebildet ist, eine Überprüfung vorzunehmen, ob die Sicherheitsüberwachung (116) fehlerfrei durchgeführt wird, wobei die erste Überwachungsinstanz (102) dazu ausgebildet ist, die Sicherheitsüberwachung (116) durchzuführen, und die zweite Überwachungsinstanz (104) dazu ausgebildet ist, die Funktionsüberwachung (118) durchzuführen, wobei die erste Überwachungsinstanz (102) dazu ausgebildet ist, ein Ergebnis der Sicherheitsüberwachung (116) in zeitlich definierten Zeitabständen (114) als eine Information (110) an die zweite Überwachungsinstanz (104) zu senden, wobei die erste Überwachungsinstanz (102) und die zweite Überwachungsinstanz (104) frei von einer gemeinsamen Schnittstelle sind, wobei die zweite Überwachungsinstanz (104) dazu ausgebildet ist, die Information (110) mittels Nutzung einer Schnittstelle (108) zwischen der zweiten Überwachungsinstanz (104) und der Steuereinheit (100) zu empfangen, wobei die Information (110) in einem durch die Steuereinheit (100) uninterpretierbarem Format codiert ist.

## Claims

1. Computer-implemented method for monitoring (118) the function of a safety monitoring system (116) of a control unit (100) of an actuator system of a motor vehicle, wherein it is checked by means of the function monitoring (118) whether the safety monitoring (116) is performed faultlessly, wherein the safety monitoring (116) is carried out by a first monitoring entity (102) and the function monitoring (118) is carried out by a second monitoring entity (104), wherein the first monitoring entity (102) sends a result of the safety monitoring (116) as an information item (110) to the second monitoring entity (104) at defined time intervals (114), wherein the first monitoring entity (102) and the second monitoring entity (104) are free of a common interface, wherein the information item (110) is received by the second monitoring entity (104) by utilizing an interface (108) between the second monitoring entity (104) and the control unit (100), wherein the information item (110) is coded in a format which cannot be interpreted by the control unit (100).

2. Method according to Claim 1, wherein the second monitoring entity (104) initiates at least one safety measure for compensating for the malfunction of the first monitoring entity (102) and/or the malfunction of the control unit (100) in the case where the function monitoring (118) shows that the information item (110), received by the second monitoring entity (104), about the safety monitoring (116) deviates from predefined nominal transmission signals with regard to content (112) and/or time intervals (114), wherein a deviation of the information item (110), received by the second monitoring entity (104), about the safety monitoring (116) from the predefined nominal transmission signals with regard to content (112) and/or time intervals (114) comprises:
- a malfunction of the first monitoring entity (102) and/or
- a malfunction of the control unit (100).

3. Method according to Claim 1, wherein the second monitoring entity (104) initiates at least one safety measure for compensating for the malfunction of the first monitoring entity (102) and/or the malfunction of the control unit (100) in the case where the function monitoring (118) shows that the information item (110), received by the second monitoring entity (104), about the safety monitoring (116) deviates from predefined nominal transmission signals with regard to content (112) and/or time intervals (114), wherein a deviation of the information item (110), received by the second monitoring entity (104), about the safety monitoring (116) from the predefined nominal transmission signals with regard to content (112) and/or time intervals (114) comprises:
- a transmission error of the information item (110) and/or
- an error in the information (110).

4. Method according to Claim 2 or 3, wherein the second monitoring entity (104) generates a warning message in the case where the function monitoring (118) shows that the information item (110), received by the second monitoring entity (104), about the safety monitoring (116) deviates from predefined nominal transmission signals with regard to the content (112) and/or the time intervals (114).

5. Method for safety monitoring (116) of a control unit (100) of an actuator system of a motor vehicle, wherein safety monitoring (116) of the control unit (100) is carried out by a first monitoring entity (102), wherein the control unit (100) and the first monitoring entity (102) form a system (106), wherein the first monitoring entity (102) sends a result of the safety monitoring (116) as an information item (110) to a second monitoring entity (104), which can be coupled to the system (106), at temporarily defined time intervals (114), wherein the first monitoring entity (102) and the second monitoring entity (104) are free of a common interface, wherein an interface (108) serves as the interface (108) of the system (106) for the second monitoring entity (104), wherein the system (106) transmits the information item (110) from the control unit (100) to the second monitoring entity (104) by utilizing the interface (108), wherein the first monitoring entity (102) codes the information (110) in a format which cannot be interpreted by the control unit (100).

6. Computer program product comprising processor-executable instructions for performing the method steps according to one of the preceding claims.

7. System (106) comprising a control unit (100) for an actuator system of a motor vehicle and a first monitoring entity (102), wherein the first monitoring entity (102) is designed for performing safety monitoring (116) of the control unit (100), wherein the first monitoring entity (102) is also designed for sending a result of the safety monitoring (116) as an information item (110) to a second monitoring entity (104), which can be coupled to the system (106), at temporarily defined time intervals (114), wherein the first monitoring entity (102) and the second monitoring entity (104) are free of a common interface (108), wherein the control unit (100) has an interface (108) for the second monitoring entity (104), wherein the system is designed for transmitting the information item (110) from the control unit (100) to the second monitoring entity (104) by utilizing the interface (108), wherein the information item (110) is coded in a format which cannot be interpreted by the control unit (100).

8. System (120) for monitoring (118) the function of a safety monitoring system (116) of a control unit (100) of an actuator system of a motor vehicle, wherein the system has a first monitoring entity (102), a second monitoring entity (104) and the control unit (100), wherein the function monitoring (118) is designed for performing a check as to whether the safety monitoring (116) is performed faultlessly, wherein the first monitoring entity (102) is designed for performing the safety monitoring (116) and the second monitoring entity (104) is designed for performing the function monitoring (118), wherein the first monitoring entity (102) is designed for sending a result of the safety monitoring (116) as an information item (110) to the second monitoring entity (104) at temporarily defined time intervals (114), wherein the first monitoring entity (102) and the second monitoring entity (104) are free of a common interface, wherein the second monitoring entity (104) is designed for receiving the information item (110) by utilizing an interface (108) between the second monitoring entity (104) and the control unit (100), wherein the information item (110) is coded in a format which cannot be interpreted by the control unit (100).

## Revendications

1. Procédé mis en oeuvre par ordinateur pour la surveillance de fonctionnement (118) d'une surveillance de sécurité (116) d'une unité de commande (100) d'un système d'actionnement d'un véhicule automobile, dans lequel, au moyen de la surveillance de fonctionnement (118), un contrôle est effectué pour savoir si la surveillance de sécurité (116) est exécutée sans erreur, dans lequel la surveillance de sécurité (116) est réalisée grâce à une première instance de surveillance (102) et la surveillance de fonctionnement (118) est réalisée grâce à une deuxième instance de surveillance (104), dans lequel la première instance de surveillance (102) envoie un résultat de la surveillance de sécurité (116) à intervalles de temps définis (114), en tant qu'une information (110), à l'attention de la deuxième instance de surveillance (104), dans lequel la première instance de surveillance (102) et la deuxième instance de surveillance (104) n'ont pas d'interface commune, dans lequel une réception de l'information (110) par la deuxième instance de surveillance (104) s'effectue par utilisation d'une interface (108) entre la deuxième instance de surveillance (104) et l'unité de commande (100), dans lequel l'information (110) est codée selon un format ne pouvant pas être interprété par l'unité de commande (100).

2. Procédé selon la revendication 1, dans lequel, au cas où la surveillance de fonctionnement (118) révèle que l'information (110) sur la surveillance de sécurité (116) réceptionnée par la deuxième instance de surveillance (104) diverge de signaux d'émission de consigne prédéfinis en ce qui concerne le contenu (112) et/ou des intervalles de temps (114), une divergence de l'information (110) sur la surveillance de sécurité (116) réceptionnée par la deuxième instance de surveillance (104) par rapport aux signaux d'émission de consigne prédéfinis en ce qui concerne le contenu (112) et/ou des intervalles de temps (114) comprenant :
- un dysfonctionnement de la première instance de surveillance (102) et/ou
- un dysfonctionnement de l'unité de commande (100),
la deuxième instance de surveillance (104) déclenche au moins une mesure de sécurité pour la compensation du dysfonctionnement de la première instance de surveillance (102) et/ou du dysfonctionnement de l'unité de commande (100).

3. Procédé selon la revendication 1, dans lequel, au cas où la surveillance de fonctionnement (118) révèle que l'information (110) sur la surveillance de sécurité (116) réceptionnée par la deuxième instance de surveillance (104) diverge de signaux d'émission de consigne prédéfinis en ce qui concerne le contenu (112) et/ou des intervalles de temps (114), une divergence de l'information (110) sur la surveillance de sécurité (116) réceptionnée par la deuxième instance de surveillance (104) par rapport aux signaux d'émission de consigne prédéfinis en ce qui concerne le contenu (112) et/ou des intervalles de temps (114) comprenant :
- une erreur de transmission de l'information (110) et/ou
- une erreur dans l'information (110),
la deuxième instance de surveillance (104) déclenche au moins une mesure de sécurité pour la compensation du dysfonctionnement de la première instance de surveillance (102) et/ou du dysfonctionnement de l'unité de commande (100).

4. Procédé selon la revendication 2 ou 3, dans lequel, au cas où la surveillance de fonctionnement (118) révèle que l'information (110) sur la surveillance de sécurité (116) réceptionnée par la deuxième instance de surveillance (104) diverge de signaux d'émission de consigne prédéfinis en ce qui concerne le contenu (112) et/ou les intervalles de temps (114), la deuxième instance de surveillance (104) génère un message d'avertissement.

5. Procédé pour la surveillance de sécurité (116) d'une unité de commande (100) d'un système d'actionnement d'un véhicule automobile, dans lequel une surveillance de sécurité (116) de l'unité de commande (100) est réalisée grâce à une première instance de surveillance (102), dans lequel l'unité de commande (100) et la première instance de surveillance (102) forment un système (106),
dans lequel la première instance de surveillance (102) envoie un résultat de la surveillance de sécurité (116) à intervalles de temps (114) définis dans le temps, en tant qu'une information (110), à l'attention d'une deuxième instance de surveillance (104) pouvant être couplée au système (106), dans lequel la première instance de surveillance (102) et la deuxième instance de surveillance (104) n'ont pas d'interface commune, dans lequel une interface (108) sert d'interface (108) du système (106) avec la deuxième instance de surveillance (104), dans lequel le système (106) transmet l'information (110), grâce à l'utilisation de l'interface (108), de l'unité de commande (100) à la deuxième instance de surveillance (104), dans lequel la première instance de surveillance (102) code l'information (110) selon un format ne pouvant pas être interprété par l'unité de commande (100).

6. Produit de programme informatique avec des instructions pouvant être exécutées par un processeur pour la mise en oeuvre des étapes du procédé selon l'une des revendications précédentes.

7. Système (106) avec une unité de commande (100) pour un système d'actionnement d'un véhicule automobile et une première instance de surveillance (102), dans lequel la première instance de surveillance (102) est réalisée pour exécuter une surveillance de sécurité (116) de l'unité de commande (100), dans lequel la première instance de surveillance (102) est en outre réalisée pour envoyer un résultat de la surveillance de sécurité (116) à intervalles de temps définis dans le temps (114), en tant qu'une information (110), à l'attention d'une deuxième instance de surveillance (104) pouvant être couplée au système (106), dans lequel la première instance de surveillance (102) et la deuxième instance de surveillance (104) n'ont pas d'interface (108) commune, dans lequel l'unité de commande (100) présente une interface (108) pour la deuxième instance de surveillance (104), dans lequel le système est réalisé pour transmettre l'information (110), grâce à l'utilisation de l'interface (108), de l'unité de commande (100) à la deuxième instance de surveillance (104), dans lequel l'information (110) est codée selon un format ne pouvant pas être interprété par l'unité de commande (100).

8. Système (120) pour la surveillance de fonctionnement (118) d'une surveillance de sécurité (116) d'une unité de commande (100) d'un système d'actionnement d'un véhicule automobile, dans lequel le système présente une première instance de surveillance (102), une deuxième instance de surveillance (104) et l'unité de commande (100), dans lequel la surveillance de fonctionnement (118) est réalisée pour effectuer un contrôle pour savoir si la surveillance de sécurité (116) est exécutée sans erreur, dans lequel la première instance de surveillance (102) est réalisée pour exécuter la surveillance de sécurité (116), et la deuxième instance de surveillance (104) est réalisée pour exécuter la surveillance de fonctionnement (118), dans lequel la première instance de surveillance (102) est réalisée pour envoyer un résultat de la surveillance de sécurité (116) à intervalles de temps définis dans le temps (114), en tant qu'une information (110), à l'attention de la deuxième instance de surveillance (104), dans lequel la première instance de surveillance (102) et la deuxième instance de surveillance (104) n'ont pas d'interface commune, dans lequel la deuxième instance de surveillance (104) est réalisée pour réceptionner l'information (110) au moyen de l'utilisation d'une interface (108) entre la deuxième instance de surveillance (104) et l'unité de commande (100), dans lequel l'information (110) est codée selon un format ne pouvant pas être interprété par l'unité de commande (100).
